# EUROPEAN PATENT SPECIFICATION

(11) **EP 1 241 074 B1**
(45) Date of publication and mention of the grant of the patent: **19.07.2006**
(21) Application number: 01307340.8
(22) Date of filing: 29.08.2001
(51) Int. Cl.: B62D 6/10, B62D 5/04, B62D 6/00, G01L 3/10

(54) **Torque sensor for vehicle**
Drehmomentsensor für ein Fahrzeug
Capteur de couple pour véhicule

(30) Priority: 16.03.2001 KR 2001013639; 03.07.2001 KR 2001039556
(43) Date of publication of application: 18.09.2002
(73) Proprietor: Mando Corporation, Pyungtaek-City, Kyungki-Do (KR)
(72) Inventor: Chung, Dai-Jong, Guri-City, Kyungki-Do (KR); No, Hee-Dong, Wonju-City, Kangwon-Do (KR); Nam, Gung-Joo, Wonju-City, Kangwon-Do (KR); Kim, Ji-Woong, Kunpo-City, Kyungki-Do (KR); Kim, Ki-Won, Pyungtak-City, Kyungki-Do (KR)
(74) Representative: Dempster, Benjamin John Naftel

(56) References cited:
- EP-A- 0 362 890
- EP-A- 0 814 012
- US-A- 5 796 014

## Description

### BACKGROUND OF THE INVENTION

### Field of the Invention

The present invention relates to a torque sensor adapted to be used in a power steering system, and, more particularly to a torque sensor for automobiles having a temperature compensating detection coil assembly, a spacer, and a magneto-resistance detection coil assembly incorporated into a housing.

### Description of the Prior Art

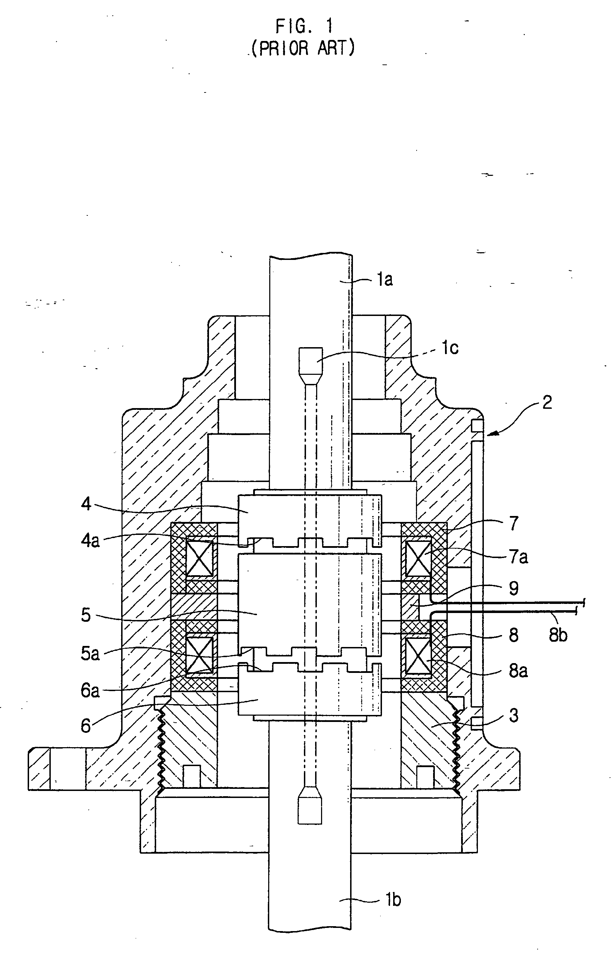

In general, a torque sensor for automobiles is usually used in a power steering system for intensifying rotating force of a steering wheel, and functions to sense a twisted condition of a torsion bar during rotation of the steering wheel. Fig. 1 shows an inner structure of such a conventional torque sensor for automobiles.

As illustrated in the drawing, the conventional torque sensor for automobile includes a torsion bar 1c adapted to concentrically connect a lower end of an input shaft 1 a and an upper end of a pinion shaft 1b, a plurality of detection rings 4, 5 and 6 coupled to the ends of the input shaft 1a and the pinion shaft 1b and intervening therebetween, which are disposed spaced from each other, and a housing 2 through which the input shaft 1a and the pinion shaft 1b are passed.

A lower end of the pinion shaft 1b is connected to a wheel (not shown), and an upper end of the input shaft 1a is connected to a steering wheel (not shown). Hence, the pinion shaft 1b is rotated while the torsion bar 1c is twisted by rotation of the steering wheel.

The plurality of detection rings 4, 5 and 6 are classified into the first detection ring 4 and the second detection ring 5 coupled to an outer surface of the lower end of the input shaft 1a and rotated in the same angle as that of the steering wheel, and the third detection ring 6 coupled to an outer surface of the upper end of the pinion shaft 1b and rotated in the substantially same angle as that of the wheel. Lower ends of the first detection ring 4 and the second detection ring 5 and an upper end of the third detection ring 6 are provided at their end surfaces with toothed portions 4a, 5a and 6a, respectively.

A temperature compensating detection coil assembly 7 and a magneto-resistance detection coil assembly 8 are contained in the housing 2. The temperature compensating detection coil assembly 7 and the magneto-resistance detection coil assembly 8 have coils 7a and 8a wound therein respectively, and surround the toothed portions 4a, 5a and 6a, to form a magnetic circuit by interaction therewith.

The temperature compensating detection coil assembly 7 surrounds the first detection ring 4 and the second detection ring 5 and the gap therebetween, and the magneto-resistance detection coil assembly 8 surrounds the second detection ring 5 and the third detection ring 6 and the gap therebetween. Between the temperature compensating detection coil assembly 7 and the magneto-resistance detection coil assembly 8 is interposed a spacer 9.

A ring-shaped stopper screw 3 having a predetermined thickness is coupled to a lower part of the housing 2 so as to fixedly position and hold the temperature compensating detection coil assembly 7 and the magneto-resistance detection coil assembly 8. The stopper screw 3 is provided at its outer surface with a male thread, thereby enabling it to be engaged with the housing 2.

In an automobile having the conventional torque sensor incorporated therein, when a driver manipulates a steering wheel, the input shaft 1a is rotated along with the pinion shaft 1b. At this point, the torsion bar 1c is twisted due to frictional force occurring between the wheels and a road surface. That is, an upper portion of the torsion bar 1c, which is connected to a steering wheel, is rotated more than a its lower end connected to wheels.

Therefore, though the first detection ring 4 and the second detection ring 5 are not varied in their areas facing to each other, facing areas of the toothed portions of the second detection ring 5 and the third detection ring 6 can vary.

With the changed facing areas of the second detection ring 2 and the third detection ring 6, a value of inductance of the magneto-resistance detection assembly 8 is varied, thereby enabling a rotating deviation to be detected by measuring the varied value of inductance.

Since the conventional torque sensor is however constructed such that the temperature compensating detection assembly 7, the spacer 9 and the magneto-resistance detection coil assembly 8 must be sequentially received in the housing 2 and then tightened by means of the stopper screw 3, an operation for fabricating the components is complicated.

Furthermore, the temperature compensating detection assembly 7, the spacer 9 and the magneto-resistance detection coil assembly 8 are disposed to assure a sufficient space for complementing thermal expansion thereof due to temperature variation so that they can be somewhat displaced in the housing 2. Therefore, the initial positions of the temperature compensating detection assembly 7, whereby the spacer 9 and the magneto-resistance detection coil assembly 8 are varied by being subjected to external vibration or shock, torque acting on the torsion bar 1c cannot be precisely detected, thereby causing reliability of products to be deteriorated.

### SUMMARY OF THE INVENTION

Accordingly, the present invention has been made keeping in mind the above problems occurring in the prior art, and an object of the present invention is to provide a torque sensor for automobiles capable of securely maintaining the initial fabricated positions of components to precisely perform detection of torque by improving a structure of its detection coil assembly.

In order to accomplish the above object, the present invention provides a torque sensor for automobiles having an input shaft connected to a steering wheel, a pinion shaft connected to the input shaft via a torsion bar, a plurality of detection rings disposed to facing ends of the input shaft and the pinion shaft, a housing having the detection rings therein and having the input shaft and the pinion shaft passed therethrough, and detection coil assemblies surrounding interconnecting portions of the detection rings, comprising: annular grooves provided between an inner surface of the housing and an outer surface of the detection coil assemblies; and retaining elements molded in the grooves by resilient material and adapted to surround the detection coil assemblies to hold them.

The grooves may be disposed at positions on an inner surface of the housing which correspond to outer surfaces of the detection coil assembly.

The housing may be provided with injection inlets communicated to the grooves to allow material constituting the retaining elements to be injected therethrough.

The housing may be provided with a lead-out opening for allowing cables connected to the detection coil assemblies, and the lead-out opening may be communicated to the grooves to allow material constituting the retaining elements to be injected therethrough.

The grooves may be circumferentially disposed outer surfaces of the detection coil assembly, and the housing may be provided with injection inlets which are communicated to the grooves when the detection coil assemblies are temporarily fabricated.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a cross-sectional view showing a conventional torque sensor for automobiles;
Fig. 2 is a cross-sectional view showing a torque sensor for automobiles according to a first embodiment of the present invention;
Fig. 3 is an exploded cross-sectional view showing an inner structure of a housing of Fig. 2;
Fig. 4 is a cross-sectional view showing temporarily fabricated detection coil assemblies of the first embodiment of the invention;
Fig. 5 is a cross-sectional view showing completely fabricated detection coil assemblies of the first embodiment of the invention;
Fig. 6 is an enlarged view of circle "A" of Fig. 5;
Fig. 7 is an exploded cross-sectional view showing an inner structure of a housing of a second embodiment of the invention;
Fig. 8 is a cross-sectional view showing fabricated detection coil assemblies of the second embodiment of the invention;
Fig. 9 is an enlarged view of circle "B" of Fig. 8;
Fig. 10 is an exploded cross-sectional view showing an inner structure of a housing of a third embodiment of the invention;
Fig. 11 is a cross-sectional view showing temporarily fabricated detection coil assemblies of the third embodiment of the invention;
Fig. 12 is a cross-sectional view showing completely fabricated detection coil assemblies of the third embodiment of the invention; and
Fig. 13 is an enlarged view of circle "C" of Fig. 12.

### DETAILED DESCRIPTION OF THE INVENTION

Reference now should be made to the drawings, in which the same reference numerals are used throughout the different drawings to designate the same or similar components.

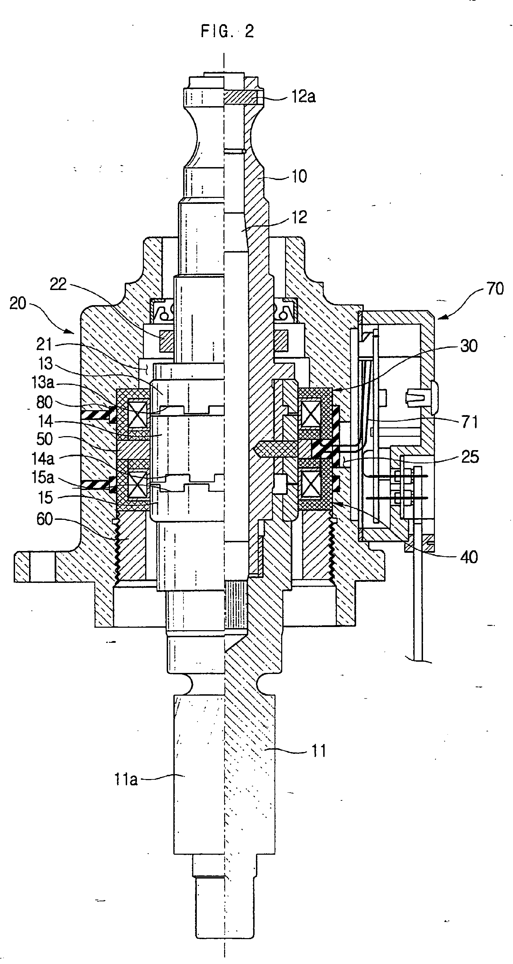

Fig. 2 is a cross-sectional view showing a torque sensor according to an embodiment of the present invention.

As shown in the drawing, the torque sensor of the invention includes an input shaft 10 and a pinion shaft 11 with a torsion bar 12 concentrically interposed therebetween, a plurality of detection rings 13, 14, 15 externally provided on a portion connecting the input shaft 10 and the pinion shaft 11, a housing 20 adapted to receive the input shaft 10 and the pinion shaft 11 passed therethrough and to receive the plurality of detection rings 13, 14 and 15, and a PCB unit 70 mounted on the housing 20 and adapted to detect a varied value of inductance and to transmit an electric signal corresponding to the value to a controller(not shown).

The input shaft 10 is connected to a steering wheel (not shown) of an automobile and rotated therewith. The pinion shaft 11 is disposed to pass through the housing 20, and is provided at its lower part with a pinion gear 11a to be engaged with a rack bar (not shown) connected to wheels (not shown). The torsion bar 12 functions to concentrically connect the pinion shaft 11 and the input shaft 10 and to rotate the pinion shaft 11 and the input shaft 10 together. To this end, the torsion bar 12 is fixed at its upper end to the input shaft 10 by means of a parallel pin 12a, and is fixedly fitted its lower end into the pinion shaft 11.

The plurality of detection rings 13, 14 and 15 are made of magnetic material, and are spacedly disposed at connection portions of the input shaft 10 and the pinion shaft 11. Among the detection rings, the first detection ring 13 and the second detection ring 14 are integrally connected to the lower end of the input shaft 10 and moved therewith, and the third detection ring 15 is externally disposed to the upper end of the pinion shaft 11 to be opposed to the second detection ring 14. Bottom surfaces of the first and the second detection rings 13 and 14 and top surfaces of the third detection ring 15 are provided with toothed portions 13a, 14a and 15a. Each of the toothed portions 13a, 14a and 15a is composed of rectangular protrusions alternately disposed on the detection rings 13, 14 and 15.

The housing 20 is shaped to have a cylindrical body and has a receiving space opening upward and downward. Therefore, when the housing 20, the input shaft 10 and the pinion shaft 11 are fabricated together such that the input shaft 10 is upward protruded from the housing 20 and the pinion shaft 11 is downward protruded from the housing 20, the first, the second and the third detection rings 13, 14 and 15 are centrally positioned in the receiving space 22. At this point, the input shaft 11 is rotatably held in the housing 20 via a roller bearing 22.

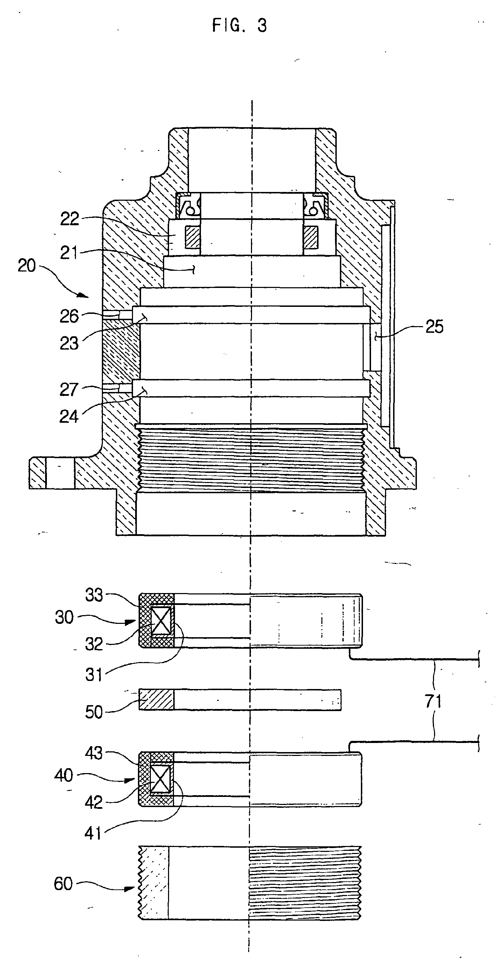

Fig. 3 is an exploded cross-sectional view of the housing of Fig. 2.

As illustrated in the drawing, a temperature compensating detection coil assembly 30 surrounding an area between the first detection ring 13 and the second detection ring 14, and a magneto-resistance detection coil assembly 40 surrounding an area between the second detection ring 14 and the third detection ring 15 are sequentially fabricated in the receiving space of the housing 20. The temperature compensating detection coil assembly 30 and the magneto-resistance detection coil assembly 40 include bobbins 31 and 41 around which coils 32 and 42 are wound, and bobbin housings 33 and 43 fitted on the bobbins 31 and 41, respectively. The temperature compensating detection coil assembly 30 and the magneto-resistance detection coil assembly 40 are spacedly disposed in the housing 20 to be somewhat displaced with a spacer 50 of a predetermined thickness therebetween.

The temperature compensating detection coil assembly 30 and the magneto-resistance detection coil assembly 40 are electrically connected to a PCB unit 70 through cables 71 extended outward. To this end, a cylindrical surface of the housing 20 on which the PCB unit 70 is mounted is formed with a lead-out opening 20 to enable the cables 71 to be led out therethrough. A reference numeral "60" indicates a ring-shaped stopper screw tightened in a lower end of the housing 20 for preventing the detection coil assemblies 30 and 40 from being withdrawn.

The housing 20 is molded with retaining elements 80 (see Fig. 2) made of elastic material using a molding apparatus so as to securely retain the temperature compensating detection coil assembly 30, the spacer 50 and the magneto-resistance detection coil assembly 40 sequentially disposed. The arrangement of the temperature compensating detection coil assembly 30 and the magneto-resistance detection coil assembly 40 will be now described in detail with reference to Figs. 3 to 6.

Referring to Fig. 3, the housing 20 is formed at its inner surface, i.e, at a wall surface of the receiving space 21 with two annular grooves 23 and 24. The annular grooves 23 and 24 are provided at positions which correspond to middle lines of the outer surface of the bobbin housings 33 and 43 under the condition that the temperature compensating detection coil assembly 30 and the magneto-resistance detection coil assembly 40 are temporarily fabricated in the housing 20.

That is, the upper first groove 23 is formed at a position corresponding to the temperature compensating detection coil assembly 30, and the lower second groove 24 is formed at a position corresponding to the magneto-resistance detection coil assembly 40 to a predetermined depth, respectively.

The housing 20 is formed at its wall surface with two injection inlets 26 and 27 for allowing molten material for constituting the retaining elements 80 to be injected therethrough. The injection inlets 26 and 27 are perforated at positions corresponding to the lead-out opening 20. The upper first injection inlet 26 is communicated to the first groove 23, and the lower second injection inlet 27 is communicated to the second groove 24.

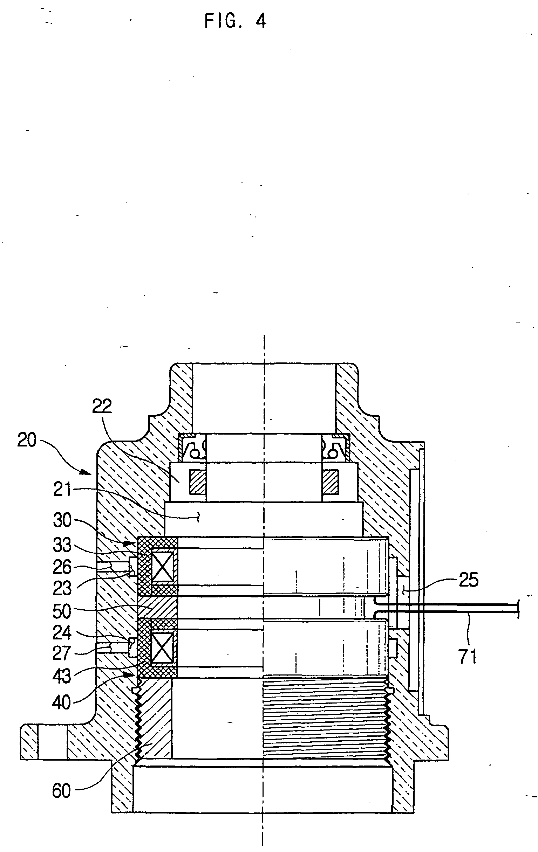

As shown in Fig. 4, when the cables 71 are led out through the lead-out opening 25 after the temperature compensating detection coil assembly 30, the spacer 50 and the magneto-resistance detection coil assembly 40 are temporarily fabricated in the housing 20 in sequence, the middle line of the temperature compensating detection coil assembly 30 is positioned to coincide with the first groove 23, and the middle line of the magneto-resistance detection coil assembly 40 is positioned to coincide with the second groove 24.

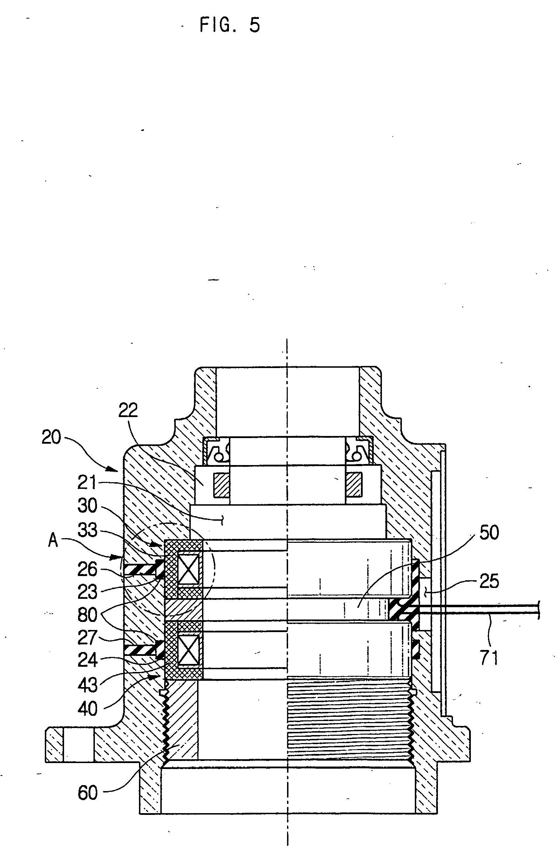

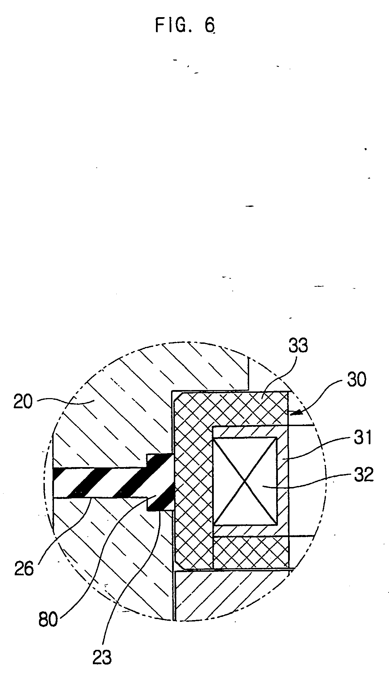

Under this condition, molten material for constituting the retaining elements 80 having elasticity is forcibly injected through the first and the second injection inlets 26 and 27, whereby the molten material is filled in the first and the second grooves 23 and 24 to form a band shape, and closely adhere to the middle line portions of the temperature compensating detection coil assembly 30 and the magneto-resistance detection coil assembly 40, as shown in Figs. 5 and 6. In the embodiment, the retaining elements 80 may be made of "SANTOPLENE MOLDER®", which is a kind of rubber and has excellent damping capability. The cured retaining elements 80 function to securely hold the temperature compensating detection coil assembly 30 and the magneto-resistance detection coil assembly 40 in a radial direction.

That is, since the elastic retaining elements 80 cure in the first and the second grooves 23 and 24 while adhering to outer surfaces of the sequentially disposed temperature compensating detection coil assembly 30 and the magneto-resistance detection coil assembly 40, the components are securely held in the receiving space 21 without any gap between the wall surface of the receiving space and the components. Upon being subjected to external vibration or shock, the temperature compensating detection coil assembly 30 and the magneto-resistance resistance detection coil assembly 40 can be somewhat displaced axially and radially because the retaining elements 80 themselves have elasticity. Subsequently, the stopper screw 60 is tightened to the lower end of the housing 20, thereby reliably preventing the components received therein from being withdrawn.

An operation of the torque sensor according to the first embodiment of the present invention will be now described.

First, when the steering wheel is manipulated by a driver under the condition that an automobile having the torque sensor of the invention incorporated therein travels, the automobile wheels are steered in a desired direction through the input shaft 10, torsion bar 12 and the pinion shaft 11, thereby causing a traveling direction of the automobile to be changed.

At this point, if excessive steering force is applied to the steering wheel, a rotating angle of the input shaft 10, which is directly rotated through the steering wheel, is larger than that of the pinion shaft 11 connected to the input 10 via the torsion bar 12, thereby causing the torsion bar 12 to be twisted.

Therefore, areas of the teeth ends 14a and 15a of the second and the third detection rings 14 and 15, which face to each other, are varied. With the variation of the facing areas, inductance value of the magneto-resistance detection coil assembly 40 is varied, thereby causing an induced voltage applied to the coil 42 to be varied.

The variation of the induced voltage is caused by variation of the magneto-resistance and is inputted to the controller (not shown) through the PCB unit 70. Subsequently, the controller measures and decides steering deviation according to the input signal and then activates a driving means according the decision to compensate the steering deviation.

When a travelling automobile is subjected to external vibration or shock during an operation of the torque sensor, the vibration or shock is absorbed into the resilient retaining elements 80.

That is, when being subjected to external vibration or shock, the retaining elements 80, which closely surround outer surfaces of the temperature compensating detection coil assembly 30 and the magneto-resistance detection coil assembly 40, are elastically deformed to have damping effect. With the damping effect, the initial fabricated positions of the temperature compensating detection coil assembly 30, the spacer 50 and the magneto-resistance detection coil assembly 50 are maintained without their axial and radial displacement, thereby enabling torque acting on the torsion bar 12 to be precisely detected.

Since an internal temperature of the housing 20 rises to a temperature of 125°C during an operation of the torque sensor, the components thermally expand due to the temperature variation. In case of such a thermal expansion of the temperature compensating detection coil assembly 30 and the magneto-resistance detection coil assembly 40, a space sufficient for accommodating the thermal expansion is assured by the elastic deformation of the retaining elements 80, thereby preventing damage to the components.

A torque sensor according to a second embodiment of the present invention will be now described. In the following description, since a construction of the torque sensor according to the second embodiment of the invention is substantially same as that of the first embodiment except for a construction related to grooves in which the retaining elements are molded, a detailed description thereof is omitted and the same reference numerals are used to designate the same or similar components.

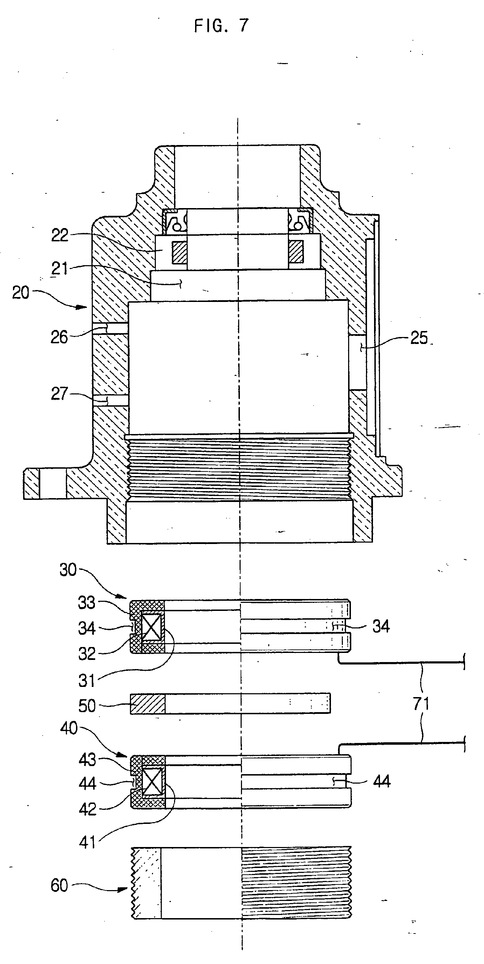

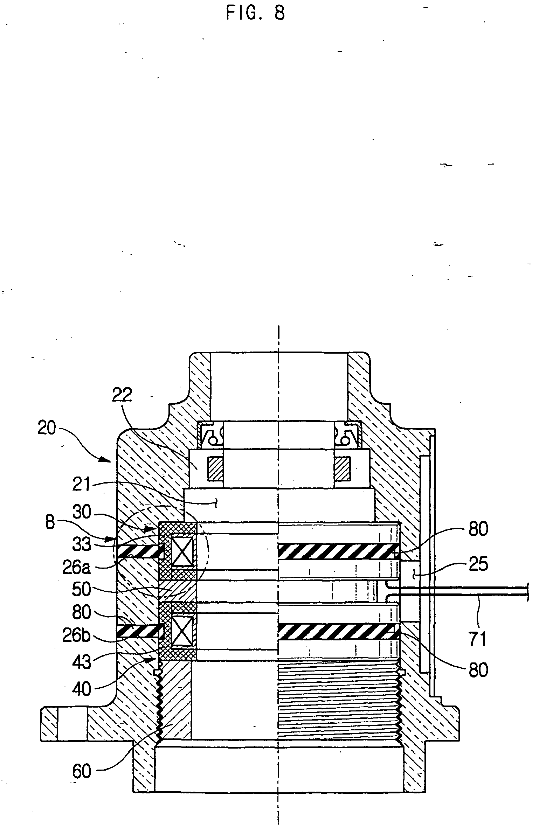

Referring to Fig. 7, the torque sensor according to the second embodiment is constructed such that the temperature compensating detection coil assembly 30, the spacer 50 and the magneto-resistance detection coil assembly 40 are sequentially inserted in the housing 20. For retaining the components in place, the detection coil assemblies 30 and 40 are provided at their outer surfaces with a first and a second grooves 34 and 44, respectively, and the first and the second grooves 34 and 44 are fitted with elastic retaining elements 80, respectively (see Fig. 8).

The first groove 34 is circumferentially formed along the middle line of the outer surface of the bobbin housing 33 of the temperature compensating detection coil assembly 30, and the second groove 44 is circumferentially formed along the middle line of the outer surface of the bobbin housing 43 of the magneto-resistance detection coil assembly 40. The first and the second grooves 34 and 44 have depth and width sufficient to allow a predetermined amount of molten material for constituting the retaining elements to be filled therein and to cure.

When the temperature compensating detection coil assembly 30, the spacer 50 and magneto-resistance detection coil assembly 40 are temporarily fabricated in the receiving space 21 of the housing 20, a wall of the housing 20 is provided at positions corresponding to the first and the second grooves 34 and 44 with the first and the second perforated injection inlets 26 and 27 for allowing molten material for constituting the retaining elements 80 to be injected therethrough.

Thereafter, when the cables 71 are led out through the lead-out opening 25, the first groove 34 formed at an outer surface of the temperature compensating detection coil assembly 30 is communicated to the first injection inlet 26 and the second groove 44 of the magneto-resistance detection coil assembly 40 is communicated to the second injection inlet 27.

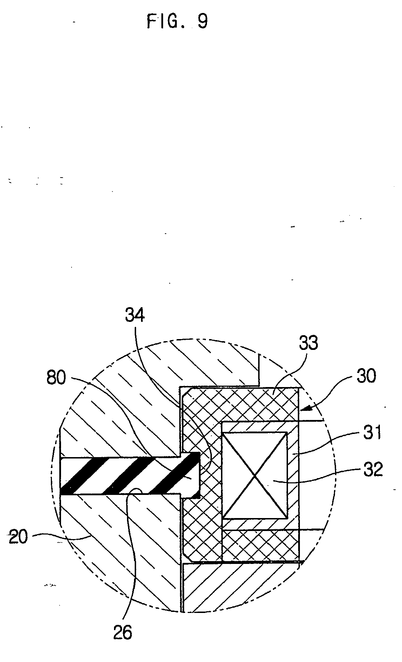

Subsequently, molten material for constituting the retaining elements 80 having resilience is forcibly injected through the first and the second injection inlets 26 and 27. The molten material is filled in the first and second grooves 34 and 44 and then gradually cures while adhering to an inner surface of the housing 20, thereby enabling the temperature compensating detection coil assembly 30 and the magneto-resistance detection coil assembly 40 to be held in place, as shown in Figs. 8 and 9.

Since the material for constituting the resilient retaining elements 80 adheres to the inner surface of the housing 20 while curing in the first and the second grooves 34 and 44, the temperature compensating detection coil assembly 30 and the magneto-resistance detection coil assembly 40 are securely held without any gap between the inner surface of the housing 20 and the components 30 and 40. Thereafter, the stopper screw 60 is tightened to the lower end of the housing 20 so as to prevent the components received in the housing 20 from being withdrawn.

As in the case with the first embodiment, upon being subjected to external vibration or shock, the temperature compensating detection coil assembly 30 and the magneto-resistance detection coil assembly 40 can be somewhat displaced axially and radially because the retaining elements 80 themselves have resilience.

Since the operation of the torque sensor according to the second embodiment is substantially the same as that of the first embodiment, a detailed description thereof is omitted.

A torque sensor according to a third embodiment of the present invention will be now described. In the following description, since a construction of the torque sensor according to the third embodiment of the invention is substantially the same as that of the first embodiment except for a construction related to injection of the retaining elements, the same reference numerals are used to designate the same or similar components and a detailed description thereof is omitted.

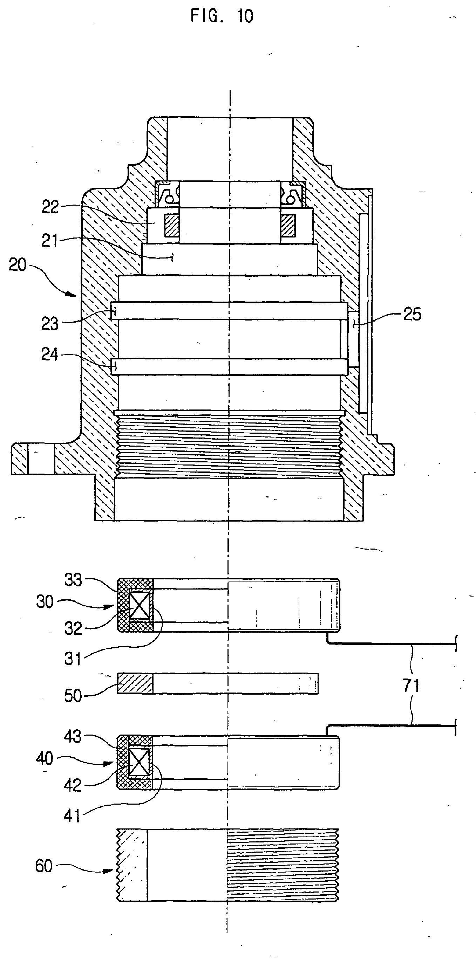

Referring to Fig. 10, the torque sensor according to the third embodiment also has the temperature compensating detection coil assembly 30, the spacer 50, and the magneto-resistance detection coil assembly 40 received therein. For retaining the components in place, the torque sensor is provided with the first and the second band-shaped grooves 23 and 24 formed at the inner surface of the housing 20, i.e., at the wall of the receiving space 21, and the retaining elements 80 molded in the first and second grooves 23 and 24 by means of a molding apparatus.

The first groove 23 is circumferentially formed along the middle line of the outer surface of the bobbin housing 33 of the temperature compensating detection coil assembly 30, and the second groove 24 is circumferentially formed along the middle line of the outer surface of the bobbin housing 43 of the magneto-resistance detection coil assembly 40. The first and the second grooves 23 and 24 are communicated to upper and lower portions of the lead-out opening 25, respectively, to allow the cables 71 to be led out therethrough. That is, the first and the second grooves 23 and 24 are communicated to each other through the lead-out opening 25.

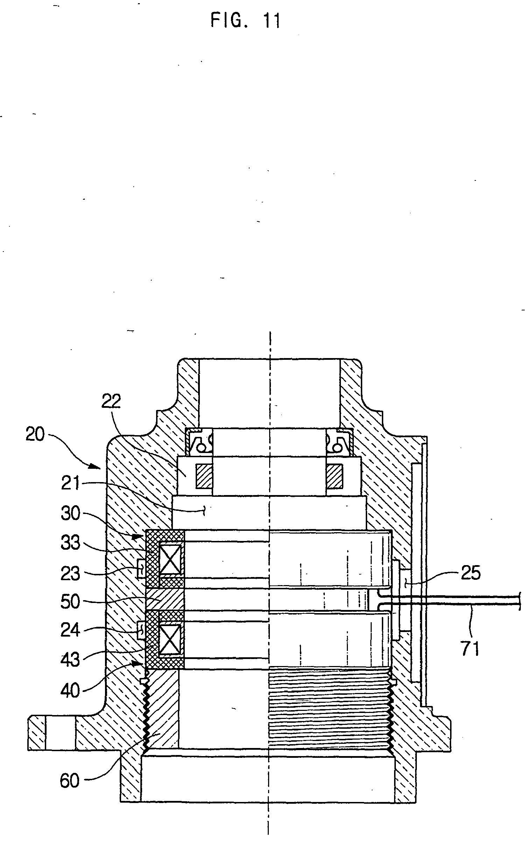

As shown in Fig. 11, when the cables 71 are led out through the lead-out opening 25 after the temperature compensating detection coil assembly 30, the spacer 50, and the magneto-resistance detection coil assembly 40 are temporarily fabricated in sequence, the middle line of the outer surface of the temperature compensating detection coil assembly 30 may coincide with the first groove 23, and the middle line of the outer surface of the magneto-resistance detection coil assembly 40 may coincide with the second groove 24.

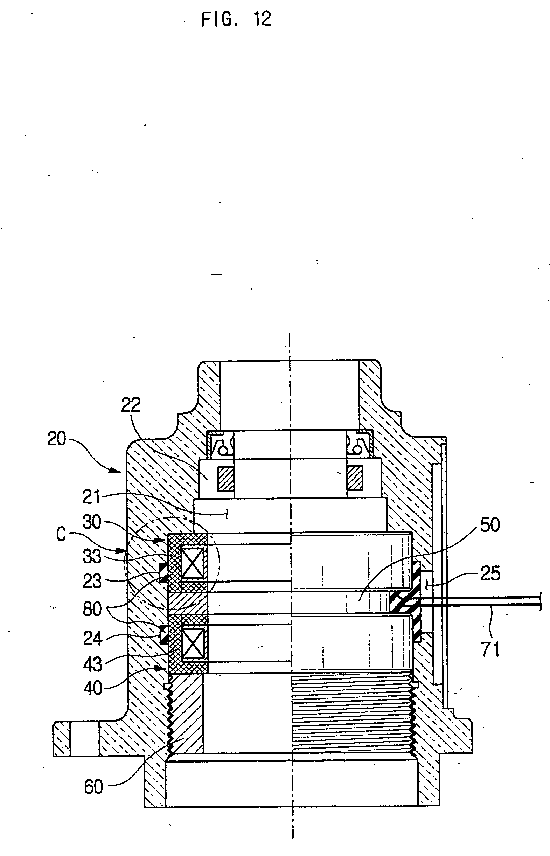

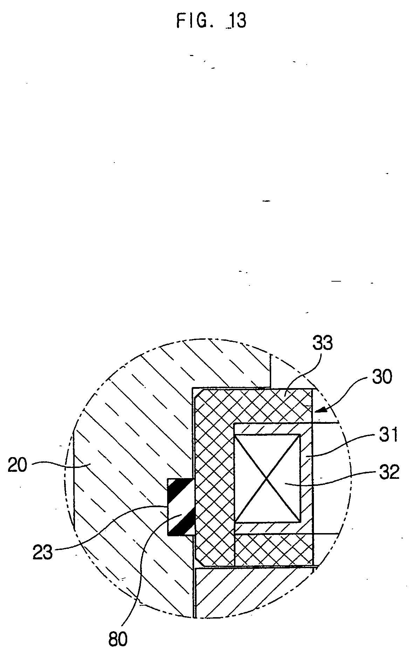

Under this condition, molten material for constituting the retaining elements 80 having resilience is forcibly injected through the lead-out opening 25. The molten material is filled in the first and second grooves 23 and 24 and then gradually cures while adhering to outer surfaces of the temperature compensating detection coil assembly 30 and the magneto-resistance detection coil assembly 40 to hold them radially, as shown in Figs. 12 and 13.

As a result, the temperature compensating detection coil assembly 30 and the magneto-resistance detection coil assembly 40 are held in the housing 20 without any gap therebetween by means of the resilient retaining elements 80. Subsequently, the stopper screw 60 is tightened to the housing 20 so as to prevent the components received in the housing 20 from being withdrawn.

Since the operation of the torque sensor according to the third embodiment is also substantially the same as that of the first embodiment, a detailed description thereof is omitted.

Though the torque sensor of the invention has been described to have the stopper screw 60 tightened therein in the above-described embodiments, the temperature compensating detection coil assembly 30 and the magneto-resistance detection coil 40 can be also held axially and radially by means of only the retaining elements 80. Therefore, withdrawal of the components can be prevented even though the stopper screw 60 is not adopted.

As described above, the present invention provides a torque sensor for automobile in which retaining elements made of resilient material having excellent damping capability are interposed between an inner surface of a housing and each of detection coil assemblies by molding process to enable the components received in the housing to be securely held. Therefore, though being subjected to external vibration or shock, the external effect can be absorbed by damping ability of the retaining elements. Furthermore, though the components in the housing thermally expand due to temperature variation, the retaining elements are elastically deformed to accommodate volume increase by the thermal expansion. In this way, since fabricated positions of the components can be securely maintained without axial and radial displacement, it is possible to precisely detect torque acting on a torsion bar.

Although preferred embodiments of the present invention has been described for illustrative purposes, those skilled in the art will appreciate that various modifications, additions and substitutions are possible, without departing from the scope of the invention as disclosed in the accompanying claims.

## Claims

1. A torque sensor for automobiles comprising:
an input shaft connected to a steering wheel;
a pinion shaft connected to the input shaft via a torsion bar;
a plurality of detection rings disposed to facing ends of the input shaft and the pinion shaft;
a housing having the detection rings therein and having the input shaft and the pinion shaft passed therethrough;
detection coil assemblies surrounding interconnecting portions of the detection rings;
annular grooves provided between an inner surface of the housing and an outer surface of the detection coil assemblies; and
retaining elements molded in the grooves by resilient material and adapted to surround the detection coil assemblies to hold them.

2. The torque sensor as set forth in claim 1, in which the grooves are disposed at positions on an inner surface of the housing which correspond to outer surfaces of the detection coil assembly.

3. The torque sensor as set forth in claim 2, in which the housing is provided with injection inlets communicated to the grooves to allow material constituting the retaining elements to be injected therethrough.

4. The torque sensor as set forth in claim 2, in which the housing is provided with a lead-out opening for allowing cables connected to the detection coil assemblies, and the lead-out opening is communicated to the grooves to allow material constituting the retaining elements to be injected therethrough.

5. The torque sensor as set forth in claim 1, in which the grooves are circumferentially disposed outer surfaces of the detection coil assembly, and the housing is provided with injection inlets which are communicated to the grooves when the detection coil assemblies are temporarily fabricated.

## Patentansprüche

1. Ein Drehmomentsensor für Kraftfahrzeuge, umfassend
- eine mit dem Lenkrad verbundene Antriebswelle ;
- eine über einen Torsionsstab mit der Antriebwelle verbundene Ritzelwelle ;
- eine Vielzahl von auf einander zugewandten Enden der Antriebswelle und der Ritzelwelle angeordnete Detektionsringe ;
- ein Gehäuse, in dem sich die Detektionsringe befinden und das von der Antriebswelle und der Ritzelwelle durchdrungen wird;
- Detektionspuleneinheiten, die Verbindungsteile der Detektionsringe umgeben;
- zwischen einer inneren Oberfläche des Gehäuses und einer äußeren Oberfläche der Detektionsspuleneinheiten zur Verfügung gestellte ringförmige Rillen; und
- in den Rillen mit einem elastischen Material eingegossene und zur Einfassung der Detektionsspuleneinheiten zu deren Halterung geeignete Rückhalteelemente.

2. Ein Drehmomentsensor nach Anspruch 1, in dem die Rillen an auf den inneren , den äußeren Oberflächen der Detektionspuleneinheit entsprechenden Oberflächen des Gehäuses gelegenen Positionen angeordnet sind.

3. Ein Drehmomentsensor nach Anspruch 2, in dem das Gehäuse mit Einspritzeinlässen versehen ist, die mit den Rillen kommunizieren, damit das die Rückhalteelemente bildende Material durch diese Einlässe eingespritzt werden kann.

4. Ein Drehmomentsensor nach Anspruch 2, in dem das Gehäuse mit Durchführungsöffnungen versehen ist, die dazu bestimmt sind, einen Anschluss von Kabeln mit den Detektionsspuleneinheiten zu ermöglichen und wobei die Durchführungsöffnungen mit den Rillen kommunizieren, damit das die Rückhalteelemente bildende Material durch diese Öffnungen eingespritzt werden kann.

5. Ein Drehmomentsensor nach Anspruch 1, in dem die Rillen umlaufend auf den äußeren Oberflächen der Detektionsspulenenheit angeordnet sind und das Gehäuse mit Einspritzeinlässen versehen ist, die mit den Rillen kommunizieren, wenn die Detektionenspuleneinheiten teilweise hergestellt sind.

## Revendications

1. Capteur de couple pour automobiles, comprenant:
un arbre d'entrée connecté à un volant de direction;
un arbre de pignon connecté à l'arbre d'entrée par l'intermédiaire d'une barre de torsion;
une pluralité d'anneaux de détection disposés en face des extrémités de l'arbre d'entrée et de l'arbre de pignon;
un boîtier contenant les anneaux de détection et traversé par l'arbre d'entrée et l'arbre de pignon;
des ensembles de bobine de détection entourant des parties d'interconnexion des anneaux de détection;
des rainures annulaires prévues entre une surface intérieure du boîtier et une surface extérieure des ensembles de bobine de détection; et
des éléments de retenue moulés dans les rainures par une matière élastique et adaptés pour entourer les ensembles de bobine de détection afin de maintenir ceux-ci.

2. Capteur de couple selon la revendication 1, dans lequel les rainures sont disposées à certaines positions sur une surface intérieure du boîtier qui correspondent à des surfaces extérieures de l'ensemble de bobine de détection.

3. Capteur de couple selon la revendication 2, dans lequel le boîtier comporte des entrées d'injection en communication avec les rainures afin de permettre l'injection à travers celles-ci de la matière constituant les éléments de retenue.

4. Capteur de couple selon la revendication 2, dans lequel le boîtier comporte une ouverture de sortie destinée à accueillir des câbles connectés aux ensembles de bobine de détection, et l'ouverture de sortie communique avec les rainures afin de permettre l'injection à travers celle-ci de la matière constituant les éléments de retenue.

5. Capteur de couple selon la revendication 1, dans lequel les rainures sont des surfaces extérieures disposées circonférentiellement de l'ensemble de bobine de détection, et le boîtier comporte des entrées d'injection communiquant avec les rainures lorsque les ensembles de bobine de détection sont fabriqués temporairement.
